# EUROPÄISCHE PATENTANMELDUNG

(11) **EP 4 756 401 A1**
(43) Veröffentlichungstag der Anmeldung: **10.06.2026**
(21) Anmeldenummer: 24217766.5
(22) Anmeldetag: 05.12.2024
(51) Int. Cl.: G01N 3/04, G01N 3/08

(54) **KNICKSTÜTZE UND VERFAHREN ZUM TESTEN VON FASERVERSTÄRKTEN KOMPONENTEN**

(71) Anmelder: Wobben Properties GmbH, 26607 Aurich (DE)
(72) Erfinder: Hesse, Ingo, 26632 Ihlow (DE); Gravemann, Andrea, 26725 Emden (DE); Conrads, Monika, 26524 Berumbur (DE)
(74) Vertreter: Eisenführ Speiser

(57) **Zusammenfassung**

Es wird eine Knickstütze (200) zum Testen einer faserverstärkten Kunststoffprobe (300) vorgesehen. Die Knickstütze (200) weist ein erstes Ende (210) mit zwei gegenüberliegenden Klemmplatten (211) jeweils mit einer Klemmfläche (211a) auf, wobei das erste Ende (210) mit den zwei Klemmplatten (211) dazu ausgestaltet ist, in eine Druck-Prüfmaschine (400) eingespannt zu werden oder an der Druck-Prüfmaschine (400) befestigt zu werden. Die Knickstütze (200) weist eine Längsrichtung (L) und ein zweites Ende (220) auf, um die Probe zumindest teilweise aufzunehmen. Das zweite Ende (220) weist einen Halter (230) auf, der zumindest einen Teil der Probe hält. Der Halter (230) weist mindestens ein erstes und zweites L-Profil oder T-Profil (230, 231) auf, die jeweils einander im Wesentlichen gegenüberliegen, wobei das erste und zweite L-Profil oder T-Profil (230, 231) dazu ausgestaltet ist, die Probe zu halten. Das mindestens eine erste und zweite L-Profil oder T-Profil (230, 231) ist senkrecht zur Längsrichtung (L) verschiebbar, so dass der Abstand zwischen gegenüberliegenden L-Profilen oder T-Profilen (231, 232) einstellbar ist und damit an eine Dicke der Probe anpassbar ist.

## Beschreibung

Die vorliegende Erfindung betrifft eine Knickstütze sowie ein Verfahren zum Testen von faserverstärkten Komponenten, insbesondere für eine Windenergieanlage.

Faserverstärkte Komponenten bilden einen wichtigen Anteil für Komponenten einer Windenergieanlage, insbesondere für die Rotorblätter der Windenergieanlage.

Um den Einfluss von Produktionseinflüssen auf die faserverstärkten Komponenten bestimmen zu können, müssen diese Komponenten getestet werden. Hierzu wird beispielsweise eine Knickstütze verwendet, welche ein seitliches Ausweichen der Probe unter Stauchung verhindern soll.

Es ist eine Aufgabe der vorliegenden Erfindung, eine verbesserte Knickstütze sowie ein verbessertes Verfahren zum Testen von faserverstärkten Komponenten einer Windenergieanlage vorzusehen.

Diese Aufgabe wird durch eine Knickstütze nach Anspruch 1 sowie durch ein Verfahren zum Testen von faserverstärkten Komponenten einer Windenergieanlage nach Anspruch 5 gelöst.

Somit wird eine Knickstütze mit einem ersten Ende, einer Längsrichtung und einem Aufnahmebereich beispielsweise am zweiten Ende vorgesehen. Das erste Ende dient dazu, in einer Prüfmaschine eingespannt zu werden oder an der Prüfmaschine befestigt zu werden. Der Aufnahmebereich ist dazu ausgestaltet, eine Probe aus einem faserverstärkten Material zumindest teilweise aufzunehmen und zu halten. In den Aufnahmebereich kann ein Teil oder Abschnitt der Probe eingeführt werden. Der Aufnahmebereich weist ferner einen Halter mit mindestens einem ersten und zweiten L-Profil oder ein T-Profil auf, welche jeweils einander im Wesentlichen gegenüberliegen und dazu ausgestaltet sind, als stützender Bereich zu dienen. Das erste und zweite L-Profil oder T-Profil lässt sich senkrecht zur Längsachse verstellen, so dass der Abstand zwischen dem ersten und zweiten L-Profil oder T-Profil einstellbar ist und damit an die Dicke der Probe angepasst werden kann.

Der Halter kann optional vor der Klemmplatte enden oder mit einer auf den Klemmplatte gleitenden einstellbaren Führung ausgestattet sein.

Gemäß einem Aspekt können entlang der Längsrichtung der Knickstütze mehrere erste und zweite Profile vorgesehen sein, so dass die Probe an unterschiedlichen Stellen entlang der Längsrichtung gestützt werden kann. Da die ersten und zweiten L-Profile oder T-Profile jeweils individuell einstellbar sind, können auch Proben mit unterschiedlichem Querschnitt oder unterschiedlicher Dicke in dem Aufnahmebereich gestützt werden. Anschließend kann eine Materialprüfung im Druckbereich erfolgen. Mit der Knickstütze können demnach auch Proben mit unterschiedlicher Dicke eingespannt werden. Ferner können quasi statische oder zyklische Druckbelastungstests durchgeführt werden.

Gemäß einem Aspekt der vorliegenden Erfindung weist das erste Ende jeweils zwei Platten, z. B. Klemmplatten, auf, zwischen welchen die Probe in der Prüfmaschine eingespannt werden kann. Durch die Ausgestaltung der Platten kann die Fläche zur Lasteinleitung in die Probe vergrößert werden. Dies führt vorteilhafterweise zu einer Reduzierung der Schubbeanspruchung sowohl bei Stauchung als auch bei Dehnung der Probe. Somit können höhere Kräfte eingeleitet werden, ohne die Kontaktflächen zur Einspannung zu überlasten.

Mit der Knickstütze gemäß der Erfindung können Proben aus faserverstärkten Laminaten in einer Ermüdungsprüfung geprüft werden.

Der Halter kann als mindestens zwei gegenüberliegende L-Profile oder T-Profile ausgestaltet sein, die jeweils an einem der Arme derart befestigbar sind, dass der Abstand zwischen den Profilen einstellbar ist.

Insbesondere kann die Knickstütze zur Ermüdungsprüfung von Proben aus faserverstärktem Kunststoff mit konstantem und mit nicht konstantem Querschnitt verwendet werden. Somit können die Proben mit Imperfektion geprüft werden, um den Einfluss der Imperfektion auf die Probe zu quantifizieren.

Somit kann eine Prüfung von realitätsnahem Laminat aus faserverstärktem Kunststoff im Druckbereich erfolgen.

Die Knickstütze kann optional am zweiten Ende zwei Führungsplatten jeweils mit einer Innenfläche aufweisen. Die Innenflächen der Führungsplatten liegen an der Außenseite des zweiten Spannplattenpaares an und dienen als weitere Führung für die Probe. Damit wird eine Führung der Probe am losen Ende der Knickstütze verbessert. Dies ist vorteilhaft, da die Führung die Steifigkeit einer Prüfmaschine mit Knickstütze und Probe erhöht. Zwischen der Probe und den Führungsplatten ist optional eine Gleitlagerung vorhanden.

Mit der Knickstütze können faserverstärkte Komponenten mit nicht konstantem Querschnitt oder Dicke, beispielsweise ein Plydrop oder eine Welle aus einem faserverstärkten Kunststoff, geprüft werden.

Eine Knickstütze stellt eine Vorrichtung dar, die ein seitliches Ausweichen der Probe unter Stauchung verhindern soll.

Die Prüfmaschine kann als eine Druck-Prüfmaschine ausgestaltet sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1A und 1B: zeigen jeweils eine perspektivische Ansicht einer Knickstütze,
- Fig. 2: zeigt eine schematische Seitenansicht der Knickstütze von Fig. 1A,
- Fig. 3: zeigt eine weitere Seitenansicht der Knickstütze von Fig. 1A,
- Fig. 4: zeigt eine schematische Darstellung der Knickstütze, welche in eine Druck-Prüfmaschine eingespannt ist,
- Fig. 5: zeigt eine schematische Darstellung einer Knickstütze mit einer Probe, welche in eine Druck-Prüfmaschine eingespannt ist,
- Fig. 6A bis 6C: zeigen jeweils eine schematische Schnittansicht eines Teils der Knickstütze, und
- Fig. 7A bis 7C: zeigen jeweils eine Ansicht einer Knickstütze.

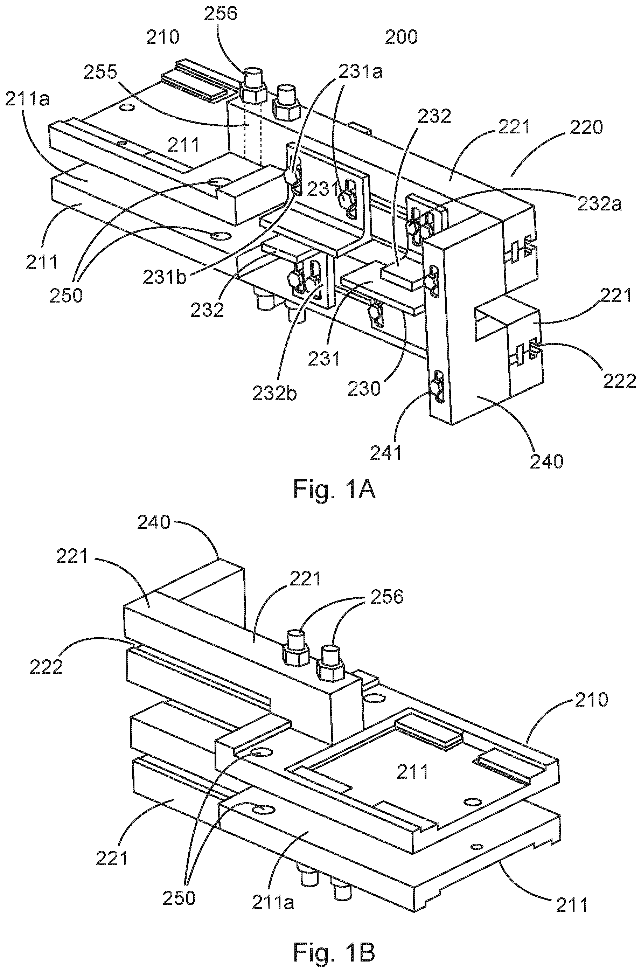

Fig. 1A und 1B zeigen jeweils eine perspektivische Ansicht einer Knickstütze. Die Knickstütze 200 weist ein erstes Ende 210 und ein zweites Ende 220 auf. An dem ersten Ende 210 sind zwei Klemmplatten 211 mit Klemmflächen 211a für eine Probe 300 vorgesehen. Im Bereich des zweiten Endes 220 sind zwei Arme 221 vorgesehen, welche beispielsweise über eine Strebe 240 am zweiten Ende 220 miteinander verbunden sein können. Insbesondere können die Arme 221 sowie die Strebe 240 miteinander mittels Schrauben 241 verschraubt sein.

Die Arme 221 weisen an ihren gegenüberliegenden Enden Bohrungen 255 für Schrauben 256 auf.

Die Klemmplatten 211 können Bohrungen 250 aufweisen, welche mittels Spannelementen 250a zum Verspannen oder Verschrauben der Klemmflächen 211a verwendet werden können.

Die Knickstütze 200 weist einen Halter 230 für die Probe 300 auf. Der Halter 230 weist mindestens ein erstes und zweites L-Profil oder T-Profil 231, 232 auf bzw. wird durch diese Profile ausgebildet. Die mindestens ersten und zweiten L-Profile 231, 232 können an den Armen 221 vorgesehen sein. Die ersten und zweiten L-Profile 231, 232 können z. B. jeweils mindestens zwei Langlöcher 231b, 232b aufweisen, mittels welcher sie senkrecht zu einer Längsrichtung L der Knickstütze 200 verschoben werden können. Insbesondere liegen erste und zweite L-Profile 231, 232 einander gegenüber. Durch das Vorsehen der Langlöcher 231b, 232b können die ersten und zweiten L-Profile oder T-Profile 232, 232 so variiert werden, dass der Abstand zwischen ihnen eingestellt werden kann. Damit können sie an unterschiedliche Dicken der zu prüfenden Probe (Komponente) 300 angepasst werden. Optional können mehrere Paare von ersten und zweiten L-Profilen 231, 232 entlang der Länge der Knickstütze 200 vorgesehen sein. Damit können auf einfache Art und Weise auch Proben mit unterschiedlichen Querschnitten oder Dicken eingespannt werden.

Optional können die ersten und zweiten L-Profile 231, 232 entlang der Arme 221 und in der Längsrichtung L verfahrbar sein.

Optional können die ersten und zweiten L-Profile 231, 232 über Schrauben 231a, 232a in oder an den Armen 221 befestigt werden.

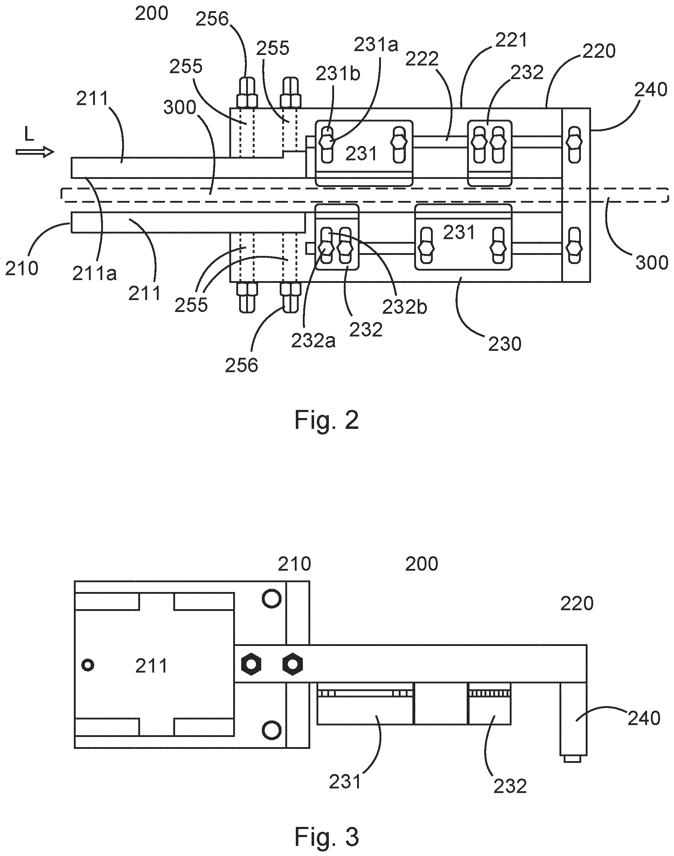

Fig. 2 zeigt eine schematische Seitenansicht der Knickstütze von Fig. 1A. In Fig. 3 ist eine weitere Seitenansicht der Knickstütze von Fig. 1 dargestellt. In Fig. 2 ist eine Seitenansicht der Klemmstütze von Fig. 1A dargestellt, wobei eine Probe 300 in der Knickstütze 200 vorgesehen ist. Die Knickstütze 200 weist ein erstes und zweites Ende 210, 220 auf. An dem ersten Ende 210 sind zwei Klemmplatten 211 jeweils mit einer Klemmfläche 211a vorgesehen. Im Bereich des zweiten Endes 220 sind zwei Arme 221 vorgesehen, welche dazu dienen, den Halter 230 mit dem ersten und zweiten L-Profil 231, 232 aufzunehmen. Die beiden Arme 221 können mittels einer Strebe 240 miteinander befestigt werden.

Die Klemmflächen 211a klemmen die Probe 300 ein, wenn die Klemmplatten 211 in einer Prüfmaschine eingeklemmt werden oder wenn die Klemmplatten 211 mittels der Bohrungen 250 verspannt oder verschraubt sind.

Die ersten und zweiten L-Profile 231, 232 können beispielsweise über Schrauben 231a, 232a in beispielsweise einer T-Nut in mindestens einem der Arme 221 verschraubt werden. Die L-Profile oder T-Profile 231, 232 weisen an ihrer einen Seite Langlöcher 231b, 232b auf, mittels welcher die ersten und zweiten L-Profile oder T-Profile 231, 232 senkrecht zur Längsachse L verschoben werden können, um eine Probe 300 einzuspannen oder zu halten.

In Fig. 2 sind jeweils ein erstes und zweites L-Profil oder T-Profil 231, 232 gegenüberliegend angeordnet. Alternativ dazu können jedoch auch zwei erste L-Profile oder T-Profile 231 oder zwei zweite L-Profile oder T-Profile 232 gegenüberliegend angeordnet sein.

Ein Merkmal der L-Profile oder T-Profile ist die Möglichkeit, die L-Profile oder T-Profile senkrecht zur Längsachse verstellen zu können, um damit einen Abstand zwischen gegenüberliegenden L-Profilen an eine Dicke der Probe anpassen zu können. Auf die Form bzw. Breite der L-Profile kommt es dabei nur sekundär an.

Ein L-Profil oder T-Profil gemäß der vorliegenden Erfindung ist beispielsweise ein Profil mit einem L-förmigen oder T-förmigen Querschnitt, wobei an einem der beiden Schenkel beispielsweise Langlöcher vorgesehen sind, um eine Einstellbarkeit der L-Profile oder T-Profile bezogen auf die Längsrichtung der Knickstütze 200 erreichen zu können.

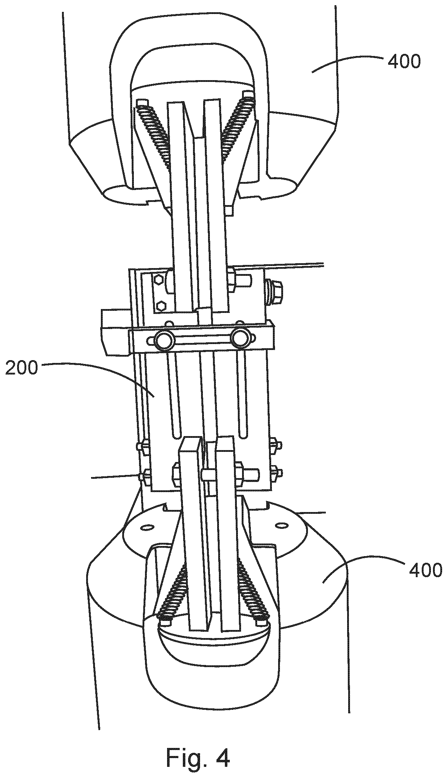

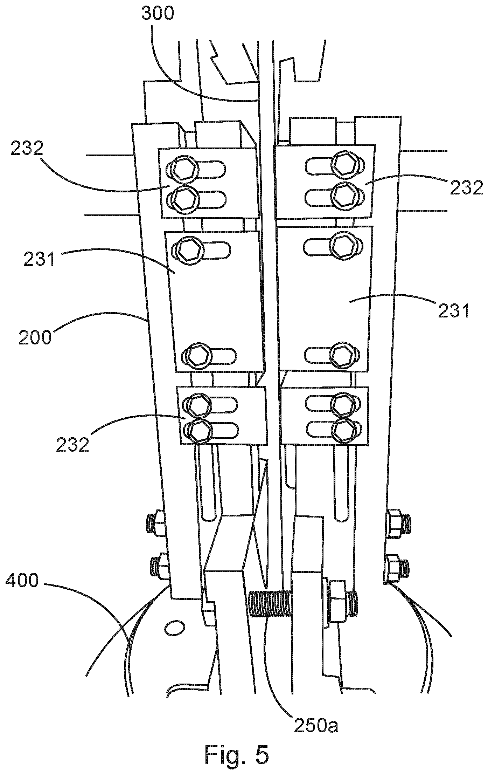

Fig. 4 zeigt eine schematische Darstellung der Knickstütze, welche in einer Druck-Prüfmaschine 400 eingespannt ist und Fig. 5 zeigt eine schematische Darstellung einer Knickstütze mit einer Probe, welche in eine Druck-Prüfmaschine 400 eingespannt ist.

In Fig. 5 ist eine Knickstütze 200 mit drei Paaren von ersten und zweiten L-Profilen oder T-Profilen 231, 232 dargestellt. In Fig. 5 ist eine Probe 300 mit gleicher Dicke mittels der L-Profile eingespannt. Die ersten und zweiten L-Profile oder T-Profile 231, 232 liegen einander gegenüber und sind senkrecht zur Längsrichtung und damit senkrecht zur zu prüfenden Probe 300 verstellbar, so dass der Abstand zwischen ihnen an die Probe einstellbar ist. Damit können auch Proben mit unterschiedlicher Dicke entlang der Längsrichtung der Probe eingespannt oder geführt werden.

Optional können die ersten und zweiten L-Profile oder T-Profile mittels Schrauben an den Armen 221 befestigt werden, so dass die Probe eingespannt werden kann.

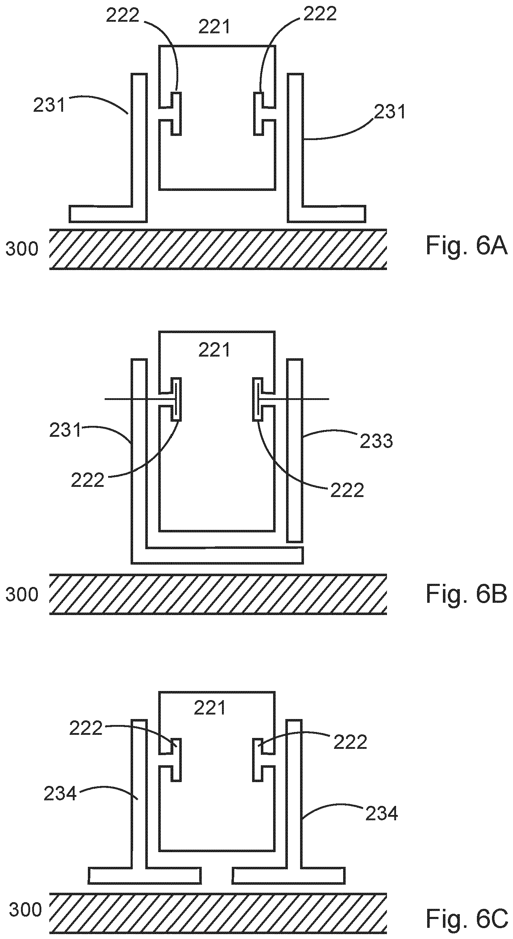

Fig. 6A bis 6C zeigen jeweils eine schematische Schnittansicht eines Teils der Knickstütze. In Fig. 6A ist ein Arm 221 am zweiten Ende 220 der Knickstütze 200 mit zwei T-Nuten 222 sowie zwei L-Profilen 231 gezeigt. Die L-Profile 231 liegen an der Probe 300 an und können mittels der T-Nuten 222 in der entsprechenden Länge an dem Arm 221 befestigt werden.

In Fig. 6B ist eine Alternative zur Ausgestaltung von Fig. 6A dargestellt. Auch hier ist ein Arm 221 mit zwei T-Nuten 222, einem L-Profil 231 und einem Versteifungselement 233 gezeigt. Während in der Ausgestaltung von Fig. 6A die kürzeren Seiten der L-Profile 231) nach außen zeigen und damit kein Teil des L-Profils 231 unterhalb des Arms 221 vorhanden ist, ist das L-Profil 231 gemäß Fig. 6B gedreht, so dass ein Teil des L-Profils 231 sich unterhalb des Arms 221 befindet. Zur weiteren Versteifung ist ein optionales Versteifungselement 233 vorgesehen, welches zum einen an dem L-Profil 231 anliegen und zum anderen mittels der T-Nuten 222 befestigt werden kann. Somit liegt dann der untere Bereich des L-Profils 231 an der Probe 300 an.

In Fig. 6C ist eine weitere Ausgestaltung dargestellt. Hier werden anstatt der L-Profile T-Profile verwendet. Die T-Profile 234 werden mittels der T-Nuten 222 an dem Arm 221 befestigt. Die anderen Enden der T-Nuten liegen an der Probe an.

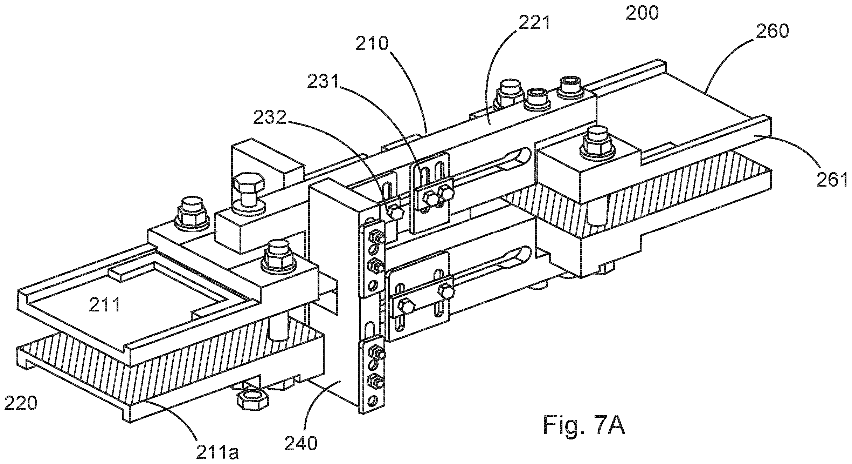

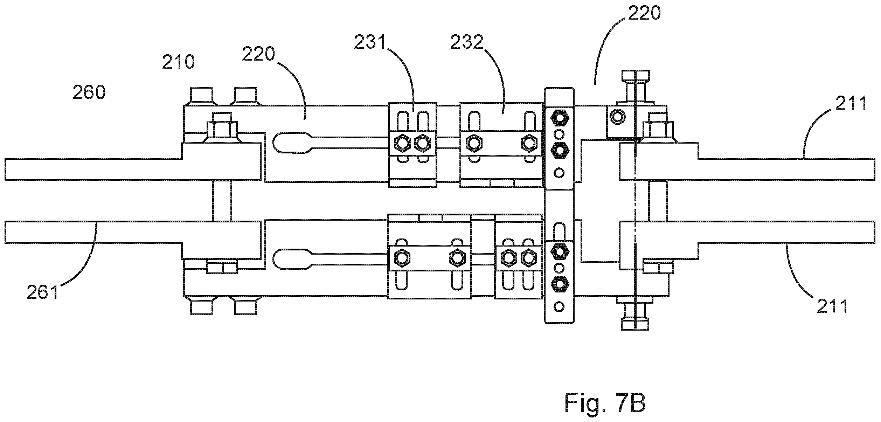

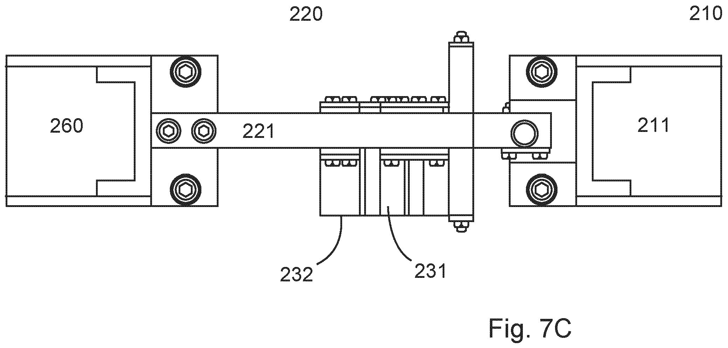

Fig. 7A bis 7C zeigt jeweils eine Ansicht einer Knickstütze. Die Knickstütze gemäß Fig. 7A bis 7C entspricht im Wesentlichen der Knickstütze von Fig. 1a bis 3. Die Knickstütze 200 weist ein erstes Ende 210 und ein zweites Ende 220 und zwei Führungsplatten 260 jeweils mit einer Innenfläche 261 am ersten Ende 210 auf. An dem ersten Ende 210 sind zwei Klemmplatten 260, 211 mit Gleitführungsflächen 261 für die Probe 300 vorgesehen. Im Bereich des zweiten Endes 220 sind zwei Arme 221 vorgesehen, welche beispielsweise über eine Strebe 240 am zweiten Ende 220 miteinander verbunden sein können. Insbesondere können die Arme 221 sowie die Strebe 240 miteinander verschraubt sein.

Die Innenflächen 261 der Führungsplatten 260 liegen an der eingeführten Probe an und dienen als weitere (Gleit)Führung für die Probe 300. Damit wird eine Führung der Probe 300 am losen Ende der Knickstütze 200 ermöglicht. Dies ist vorteilhaft, da die die Steifigkeit einer Prüfmaschine mit Knickstütze 200 und Probe 300 erhöht. Zwischen der Probe und den Führungsplatten ist eine Gleitlagerung vorhanden.

Die Knickstütze 200 weist einen Halter 230 für die Probe 300 auf. Der Halter 230 weist mindestens ein erstes und zweites L-Profil oder T-Profil 231, 232 auf. Die mindestens ersten und zweiten L-Profile 231, 232 können an den Armen 221 vorgesehen sein. Die ersten und zweiten L-Profile 231, 232 können z. B. jeweils mindestens zwei Langlöcher 231b, 232b aufweisen, mittels welcher sie senkrecht zu einer Längsrichtung L der Knickstütze 200 verschoben werden können. Insbesondere liegen erste und zweite L-Profile 232, 232 einander gegenüber. Durch das Vorsehen der Langlöcher 231b, 233b können die ersten und zweiten L-Profile oder T-Profile 232, 232 so variiert werden, dass der Abstand zwischen ihnen eingestellt werden kann. Damit können sie an unterschiedliche Dicken der zu prüfenden Probe (Komponente) 300 angepasst werden. Optional können mehrere Paare von ersten und zweiten L-Profilen 231, 232 entlang der Länge der Knickstütze 200 vorgesehen sein. Damit können auf einfache Art und Weise auch Proben mit unterschiedlichen Querschnitten oder Dicken eingespannt werden.

### Bezugszeichenliste

- 200: Knickstütze
- 210: erstes Ende
- 211: Klemmplatten
- 211a: Klemmflächen
- 220: zweites Ende
- 221: Arme
- 222: T-Nut
- 230: Halter
- 231: erstes L-Profil oder T-Profil
- 231a: Schraube
- 231b: Langloch
- 232: zweites L-Profil oder T-Profil
- 232a: Schraube
- 232b: Langloch
- 233: Versteifungselement
- 234: T-Profil
- 240: Strebe
- 241: Schraube
- 250: Bohrungen
- 251: Schrauben
- 255: Bohrungen
- 260: Führungsfläche
- 261: Innenfläche
- 300: Probe
- 400: Prüfmaschine
- L: Längsrichtung
- 710: Gleitlagereinstellschraube

## Patentansprüche

1. Knickstütze (200) zum Testen einer faserverstärkten Kunststoff-Probe (300), mit
einem ersten Ende (210) mit zwei gegenüberliegenden Klemmplatten (211) jeweils mit einer Klemmfläche (211a), wobei das erste Ende (210) mit den zwei Klemmplatten (211) dazu ausgestaltet ist, in einer Prüfmaschine (400), insbesondere einer Druck-Prüfmaschine, eingespannt zu werden oder an der Prüfmaschine (400) befestigt zu werden,
einer Längsrichtung (L), und
einem zweiten Ende (220), welches dazu ausgestaltet ist, die Probe (300) zumindest teilweise aufzunehmen,
wobei das zweite Ende (220) einen Halter (230) aufweist, der dazu ausgestaltet ist, zumindest einen Teil der Probe (300) zu halten,
wobei der Halter (230) mindestens ein erstes und zweites L-Profil oder T-Profil (230, 231) aufweist, die jeweils einander im Wesentlichen gegenüberliegen, wobei das erste und zweite L-Profil oder T-Profil (230, 231) dazu ausgestaltet ist, die Probe (300) zu halten,
wobei das mindestens eine erste und zweite L-Profil oder T-Profil (230, 231) senkrecht zur Längsrichtung (L) verschiebbar ist, so dass der Abstand zwischen gegenüberliegenden L-Profilen oder T-Profilen (231, 232) einstellbar ist und damit an eine Dicke der Probe (300) anpassbar ist.

2. Knickstütze (200) nach Anspruch 1, wobei
der Halter (230) eine Mehrzahl von ersten und zweiten L-Profilen oder T-Profilen (231, 232) entlang einer Längsrichtung (L) der Knickstütze (200) aufweist.

3. Knickstütze (200) nach Anspruch 1 oder 2, wobei
das zweite Ende (220) jeweils zwei Arme (221) aufweist, an welchen der Halter (230) mit den ersten und zweiten L-Profilen oder T-Profilen (231, 232) befestigbar sind.

4. Knickstütze (200) nach Anspruch 3, mit
einem ersten Abschnitt mit einer Klemmplatte (211) und einem Arm (221) und einem zweiten Abschnitt mit einer Klemmplatte (211) und einem Arm (221), wobei die beiden Arme (221) über die Strebe (240) miteinander verbunden sind.

5. Knickstütze (200) nach einem der Ansprüche 1 bis 4, ferner mit
zwei Führungsplatten (260) jeweils mit einer Gleitführungsfläche (261) an dem ersten Ende (221), wobei eine eingeführte Probe (300) an den Gleitführungsflächen (261) anliegt und durch die Gleitführungsflächen (261) geführt ist.

6. Verfahren zum Testen einer faserverstärkten Kunststoff-Komponente einer Windenergieanlage mittels einer Prüfmaschine und einer Knickstütze (200) nach einem der Ansprüche 1 bis 5, mit den Schritten:
Einspannen einer faserverstärkten Komponente (300) als Probe in eine Knickstütze (200),
wobei die Komponente (300) mittels der Klemmplatten (211) und mittels des ersten und zweiten L-Profils oder T-Profils (231, 232) in der Knickstütze (200) einspannbar ist,
wobei eine Mehrzahl von ersten und zweiten L-Profilen oder T-Profilen entlang der Längsrichtung (L) vorgesehen ist, so dass die Knickstütze (200) Komponenten (300) mit nicht konstantem Querschnitt oder Breite einspannen kann, und
Durchführen der Druckprüfungen.
